# EUROPÄISCHE PATENTSCHRIFT

(11) **EP 3 324 517 B1**
(45) Veröffentlichungstag und Bekanntmachung des Hinweises auf die Patenterteilung: **15.04.2020**
(21) Anmeldenummer: 17197710.1
(22) Anmeldetag: 23.10.2017
(51) Int. Cl.: H02K 1/32

(54) **ELEKTRISCHE MASCHINE**
ELECTRIC MACHINE
MACHINE ÉLECTRIQUE

(30) Priorität: 21.11.2016 DE 102016222846
(43) Veröffentlichungstag der Anmeldung: 23.05.2018
(73) Patentinhaber: AUDI AG, 85045 Ingolstadt (DE)
(72) Erfinder: Scharlach, Albert, 85129 Oberdolling (DE)

(56) Entgegenhaltungen:
- WO-A2-2014/140709
- DE-A1-102013 020 331
- DE-A1-102013 214 082
- DE-A1-102014 110 299
- JP-A- 2008 228 522
- JP-A- 2010 263 757
- JP-A- 2014 050 219
- JP-U- S6 244 659
- JP-U- S55 120 254
- JP-U- S61 165 055
- US-A- 4 499 660
- US-A1- 2013 020 889

## Beschreibung

Die Erfindung betrifft eine elektrische Maschine, umfassend einen Stator und einen Rotor, wobei der Rotor ein an einer Rotorwelle der elektrischen Maschine befestigtes Blechpaket aus in Axialrichtung des Rotors geschichteten Blechen umfasst. Daneben betrifft die Erfindung ein Kraftfahrzeug sowie ein Verfahren zur Herstellung eines Rotors einer elektrischen Maschine.

Elektrische Maschinen, die als Generatoren hohe Leistungen aufnehmen und/oder als Motoren hohe Leistungen bereitstellen können, werden in einer Vielzahl von Anwendungsfällen genutzt. Beispielsweise werden entsprechende elektrische Maschinen in Kraftfahrzeugen als ein Teil eines Hybridantriebs oder als Antriebsmaschine bei einem rein elektrischen Fahrbetrieb genutzt. Soll eine hohe Leistungsdichte erreicht werden, kann es erforderlich sein, die elektrische Maschine zu kühlen. Hierzu sind eine Vielzahl von Ansätzen bekannt, beispielsweise die Kühlung des Stators der elektrischen Maschine mit einem Kühlmantel, der beispielsweise von Wasser durchströmt werden kann, um den Stator der elektrischen Maschine zu kühlen.

Kühlanordnungen für elektrische Maschinen sind aus JPS61165055U, DE102013214082, JP2010263757, US4499660, JP2008228522, WO 2014/140709, US2013/020889 und JP2014050219 bekannt.

Insbesondere bei Asynchron-Maschinen ist es möglich, dass sich der Rotor der elektrischen Maschine stark erwärmt. Wird der Rotor ausschließlich über die Umgebungsluft gekühlt, also beispielsweise über den Luftspalt zwischen Rotor und Stator und/oder die Stirnflächen des Rotors, ist eine ausreichende Kühlung insbesondere des Innenbereichs des Rotors häufig nur eingeschränkt möglich, so dass die Leistungsfähigkeit der elektrischen Maschine hierdurch eingeschränkt sein kann.

Der Erfindung liegt somit die Aufgabe zugrunde, die Kühlung eines Rotors einer elektrischen Maschine zu verbessern.

Die Aufgabe wird erfindungsgemäß durch eine elektrische Maschine gemäß Anspruch 1 gelöst.

In der erfindungsgemäßen elektrischen Maschine werden wenigstens zwei separate Kühlkanäle oder Gruppen von Kühlkanälen vorgesehen, denen voneinander unterschiedliche Kühlfluide zuführbar sind. Die elektrische Maschine wird derart ausgebildet, dass diesen Kühlkanälen unterschiedliche Kühlfluide zugeführt werden. Insbesondere kann einem der Kühlkanäle oder einer Gruppe der Kühlkanäle ein flüssiges Kühlfluid und dem anderen Kühlkanal oder der anderen Gruppe von Kühlkanälen ein gasförmiges Kühlfluid zugeführt werden. Dies kann beispielsweisedadurchrealisiert werden, dass eines der Kühlfluide über eine als Hohlwelle ausgebildete Rotorwelle zu dem Blechpaket geführt wird und das andere Kühlfluid durch eine axialseitige Öffnung des Blechpakets bzw. über eine zwischen der Rotorwelle und dem Blechpaket verlaufende Nut.

Erfindungsgemäß wird vorgeschlagen, wenigstens einen Kühlkanal vorzusehen, der den Rotor, also das Blechpaket bzw. die daran angeordneten Kurzschlussringe, radial durchsetzt. Dies ermöglicht es, Kühlfluid, insbesondere ein Gas und/oder eine Flüssigkeit, durch das Blechpaket und/oder den Kurzschlussring zu führen, um den Rotor von Innen zu kühlen. Im Rotor entstehende Abwärme kann somit direkt aus jenen Bereich abgeführt werden, in denen sie entsteht. Hierdurch können die Kühlung des Rotors verbessert und die Leistungsfähigkeit der elektrischen Maschine erhöht werden.

Es ist möglich, dass sich der Kühlkanal ausschließlich durch das Blechpaket, ausschließlich durch den Kurzschlussring oder sowohl durch das Blechpaket als auch durch den Kurzschlussring erstreckt. Vorzugsweise sind mehrere Kühlkanäle vorgesehen, die die Komponenten des Rotors zumindest abschnittsweise radial durchsetzen. Das Kühlfluid kann beispielsweise Luft oder Öl sein. Hierbei werden gemäß der Erfindung separate Kühlkanäle für verschiedene Kühlfluide vorgesehen sind. Beispielsweise können ein Kühlkanal oder mehrere Kühlkanäle vorgesehen sein, durch die eine Flüssigkeit, beispielsweise Öl, geführt wird, und ein Kühlkanal oder mehrere Kühlkanäle, durch die ein Gas, beispielsweise Luft, geführt wird.

Bei der elektrischen Maschine kann es sich um eine Asynchronmaschine handeln. Das Blechpaket kann Stromleitelemente des Rotors tragen, beispielsweise Stäbe aus Kupfer, Aluminium oder Ähnlichem. In Axialrichtung des Rotors können vorzugsweise an beiden Seiten des Blechpakets Kurzschlussringe vorgesehen sein, die die einzelnen Stromleitelemente kurzschließen. Ein entsprechender Aufbau von Asynchronmaschine ist, abgesehen von den vorgeschlagenen Kühlkanälen, im Stand der Technik bekannt.

Der Kühlkanal kann wenigstens einen Abschnitt aufweisen, der sich in Umfangsrichtung und/oder in Axialrichtung des Rotors erstreckt. Die zumindest abschnittsweise Führung des Kühlkanals in Radialrichtung kann der Förderung des Kühlfluids zuträglich sein, da bei einer Förderung des Kühlfluids zum äußeren Rand des Rotors hin die bei einer Rotation des Rotors auftretende Zentrifugalkraft zum Fluidtransport genutzt werden kann. Durch das zusätzliche Führen der Kühlkanäle in Umfangs- und/oder Axialrichtung kann der Kühlkanal verlängert werden, womit ein Wärmeaustausch zwischen dem Kühlfluid und dem Rotor verbessert werden kann.

Der Kühlkanal kann wenigstens eine Verzweigung und/oder Zusammenführung von Teilkanälen aufweisen, das heißt, das Kühlfluid kann innerhalb des Kühlkanals auf mehrere Teilkanäle verteilt werden und/oder Kühlfluid aus mehreren Teilkanälen kann innerhalb des Kühlkanals wieder zusammengeführt werden.

Im Rahmen der Herstellung der elektrischen Maschine ist es möglich, dass der Kühlkanal durch Bearbeitung des bereits zusammengefügten Blechpakets in das Blechpaket eingebracht wird. Die Herstellung kann jedoch vereinfacht werden, indem bereits in die einzelnen Bleche vor dem Stapeln Ausnehmungen und/oder Durchbrechungen eingebracht werden, die beim Stapeln der Bleche den Kühlkanal bilden.

Der Kühlkanal kann durch wenigstens zwei Bleche des Blechpakets begrenzt werden und/oder der Kurzschlussring kann wenigstens zwei axial benachbarte Scheiben aufweisen, die den Kühlkanal begrenzen. Insbesondere wenn die Kühlkanäle gewinkelt sein sollen, kann es aufwendig sein, entsprechende Kühlkanäle in einem einteiligen Kurzschlussring bzw. in das bereits zusammengesetzte Blechpaket einzubringen. Die Herstellung kann vereinfacht werden, indem einzelne Bleche des Blechpakets und/oder Scheiben, die nach einem Zusammensetzen den Kurzschlussring bilden, vor dem Zusammensetzen zum Blechpaket bzw. zum Kurzschlussring bearbeitet werden. In diesem Fall können mit relativ geringem Aufwand die einzelnen Scheiben und/oder Bleche durchbrochen werden und/oder es können Ausnehmungen in die Bleche bzw. Scheiben eingebracht werden. Durch eine entsprechende Anordnung der Ausnehmungen und/oder Durchbrechungen und/oder eine entsprechende Wahl der Orientierung der einzelnen Bleche bzw. Scheiben beim Zusammensetzen zu dem Blechpaket bzw. dem Kurzschlussring kann ein Kühlkanal mit gewünschter Form ausgebildet werden.

Der Kühlkanal kann dadurch ausgebildet sein, dass mehrere Bleche wenigstens eine jeweilige Durchbrechung in Axialrichtung des Rotors aufweisen. Insbesondere ist der oder wenigstens einer der in Radialrichtung des Rotors verlaufenden Abschnitte des Kühlkanals durch eine solche Durchbrechung gebildet. Wenigstens zwei der Bleche können sich bezüglich der Anzahl und/oder der Form und/oder der Position und/oder der Orientierung von zumindest Teilen ihrer Durchbrechungen voneinander unterscheiden, wobei der Kühlkanal durch Durchbrechungen dieser Bleche gebildet ist. Insbesondere können die Bleche mit voneinander unterschiedlichen Durchbrechungen axial zueinander benachbart angeordnet sein. Hierbei können die einzelnen Durchbrechungen oder Teile der Durchbrechungen der einzelnen Bleche in Umfangs- und Radialrichtung überlappen, so dass ein Fluidaustausch zwischen diesen Durchbrechungen möglich ist.

In einer besonders bevorzugten Ausführungsform werden die Seitenwände des Kühlkanals oder eines Abschnitts des Kühlkanals durch wenigstens vier Bleche gebildet. Hierbei können ein zweites und ein drittes Blech, die zwischen einem ersten und vierten Blech angeordnet sind, jeweils Durchbrechungen aufweisen, durch die der Kühlkanal gebildet wird. In Abschnitten, in denen ausschließlich das zweite Blech durchbrochen ist, werden die Wände des Kühlkanals durch die Begrenzungen der Durchbrechung des zweiten Blechs sowie durch das erste und dritte Blech gebildet. In Abschnitten, in denen ausschließlich das dritte Blech durchbrochen ist, werden die Seitenwände des Kühlkanals durch die Begrenzung der Durchbrechung des dritten Blechs sowie durch das zweite und vierte Blech gebildet. Ein Fluidaustausch zwischen Abschnitten, in denen ausschließlich das zweite Blech durchbrochen ist, und Abschnitten, in denen ausschließlich das dritte Blech durchbrochen ist, ist durch Abschnitte möglich, in denen sowohl das zweite als auch das dritte Blech durchbrochen sind. Das erläuterte Beispiel kann offensichtlich auf vielfältige Weise weitergebildet werden. Beispielsweise können statt einzelnen Blechen jeweils Stapel von zwei oder mehr identischen Blechen genutzt werden, die gleich orientiert sind. Ergänzend kann ein Kühlkanal durch Durchbrechungen in mehr als zwei Blechen gebildet sein, wodurch der Kühlkanal in Axialrichtung des Rotors geführt werden kann.

Der Kühlkanal oder zumindest einer der Kühlkanäle kann sich von einer radial innenliegenden Innenmantelfläche des Blechpakets oder des Kurzschlussrings zu einer radial außenliegenden Außenmantelfläche des Blechpakets oder des Kurzschlussrings erstrecken. Der Kühlkanal kann somit einen Innenmantel des Rotors mit einem Außenmantel des Rotors verbinden, womit eine effiziente Durchflutung des Rotors durch Ausnutzung von Zentrifugalkräften erreicht werden kann. Das Kühlfluid kann dem Kühlkanal von Seiten der Rotorwelle, beispielsweise über eine als Hohlwelle ausgebildete Rotorwelle oder eine zwischen der Rotorwelle und dem Blechpaket liegende Nut der Rotorwelle und/oder des Blechpakets, zugeführt werden. An der Außenmantelfläche kann das Kühlfluid in den Spalt zwischen Rotor und Stator oder benachbart hierzu geführt werden. Wird ein Gas als Kühlfluid genutzt, kann das Einbringen des Kühlfluids in den Spalt zwischen Rotor und Stator zusätzlich dazu genutzt werden, diesen von Schmiermittel oder einem weiteren genutzten flüssigen Kühlmittel frei zu blasen und somit die Rotationseigenschaften der elektrischen Maschine zu verbessern.

Innerhalb der Rotorwelle und/oder zwischen der Rotorwelle und dem Blechpaket und/oder innerhalb des Blechpakets kann eine in Axialrichtung verlaufende Kühlfluidleitung ausgebildet sein, über die das Kühlfluid dem Kühlkanal zuführbar ist. Erfolgt die Zuführung an der Innenmantelfläche, so kann diese, wie vorangehend erläutert, insbesondere über eine als Hohlwelle ausgebildete Rotorwelle oder über eine rillenförmige Ausnehmung des Blechpakets und/oder der Rotorwelle erfolgen.

Die elektrische Maschine kann eine Umwälzeinrichtung aufweisen, durch die das Kühlfluid durch den Kühlkanal zirkulierbar ist. Bei der Umwälzeinrichtung kann es sich um einen oder mehrere Ventilatoren handeln, die in einem Innenraum eines Gehäuses der elektrischen Maschine angeordnet sind und ein Kühlfluid in diesem Innenraum umwälzen. Bei der Umwälzeinrichtung kann es sich jedoch auch um eine Pumpe handeln, die gasförmiges und/oder flüssiges Kühlfluid zu dem Kühlkanal pumpt oder aus diesem absaugt. Beispielsweise kann Kühlfluid über eine als Hohlwelle ausgebildete Rotorwelle zu dem Kühlkanal gepumpt oder aus diesem herausgesaugt werden.

Neben der erfindungsgemäßen elektrischen Maschine betrifft die Erfindung ein Kraftfahrzeug, das eine erfindungsgemäße elektrische Maschine umfasst.

Zudem betrifft die Erfindung ein Verfahren zur Herstellung eines Rotors einer elektrischen Maschine gemäß Anspruch 9, wobei mehrere Bleche mit jeweils mehreren Durchbrechungen bereitgestellt werden, wobei die Bleche zu einem an einer Rotorwelle angeordneten Blechpaket gestapelt werden, wobei in mehrere, durch Teile der Durchbrechungen der Bleche gebildete, das Blechpaket axial durchsetzende Ausnehmungen ein jeweiliges Stromleitelement eingebracht wird, wobei die Bleche derart gestapelt werden, dass sich zumindest zwei benachbarte Bleche bezüglich der Anzahl und/oder der Form und/oder der Position und/oder der Orientierung von zumindest Teilen ihrer Durchbrechungen voneinander unterscheiden und/oder wobei die Bleche relativ zueinander rotiert gestapelt werden, wobei durch einen weiteren Teil der Durchbrechungen wenigstens ein Kühlkanal für Kühlfluid ausgebildet wird, der sich zumindest abschnittsweise in Radialrichtung des Rotors erstreckt und wobei der wenigstens ein Kühlkanal zwei separate Kühlkanäle oder Gruppen der Kühlkanäle umfasst, denen voneinander unterschiedliche Kühlfluide zuführbar sind.

Zusätzlich kann im Rahmen der Herstellung des Rotors wenigstens ein Kurzschlussring axial an dem Blechpaket angeordnet werden, durch den die Stromleitelemente kurzgeschlossen werden. Der Kurzschlussring kann insbesondere aus mehreren Scheiben zusammengesetzt werden, die Ausnehmungen und/oder Durchbrechungen aufweisen, die beim Zusammensetzen der Scheiben zur Ausbildung des Kurzschlussrings einen den Kühlkanal fortsetzenden Kühlkanalabschnitt und/oder einen weiteren Kühlkanal ausbilden. Wie bereits zur erfindungsgemäßen elektrischen Maschine erläutert, ist die Herstellung des Rotors durch eine Nutzung von Blechen mit entsprechenden Durchbrechungen bzw. einem aus mehreren Scheiben zusammengesetzten Kurzschlussring besonders einfach möglich. Selbstverständlich kann das erfindungsgemäße Verfahren mit den zur elektrischen Maschine erläuterten Merkmalen weitergebildet werden und umgekehrt, um die jeweils zu den einzelnen Merkmalen genannten Vorteile zu erreichen.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen elektrischen Maschine,
- Fig. 2: eine von mehreren Scheiben eines Kurzschlussrings in der elektrischen Maschine gemäß Fig. 1,
- Fig. 3: einen Rotor eines weiteren Ausführungsbeispiels einer erfindungsgemäßen elektrischen Maschine, der gemäß einem Ausführungsbeispiel des erfindungsgemäßen Verfahrens hergestellt ist,
- Fig. 4 und 5: verschiedene Bleche, die im Rahmen eines weiteren Ausführungsbeispiels des erfindungsgemäßen Verfahrens genutzt werden können, um den Rotor eines weiteren Ausführungsbeispiels einer erfindungsgemäßen elektrischen Maschine herzustellen,
- Fig. 6: eine überlagerte Darstellung der Bleche gemäß Fig. 4 und 5 zur Verdeutlichung des Verlaufs der Kühlkanäle, und
- Fig. 7: ein Ausführungsbeispiel eines erfindungsgemäßen Kraftfahrzeugs.

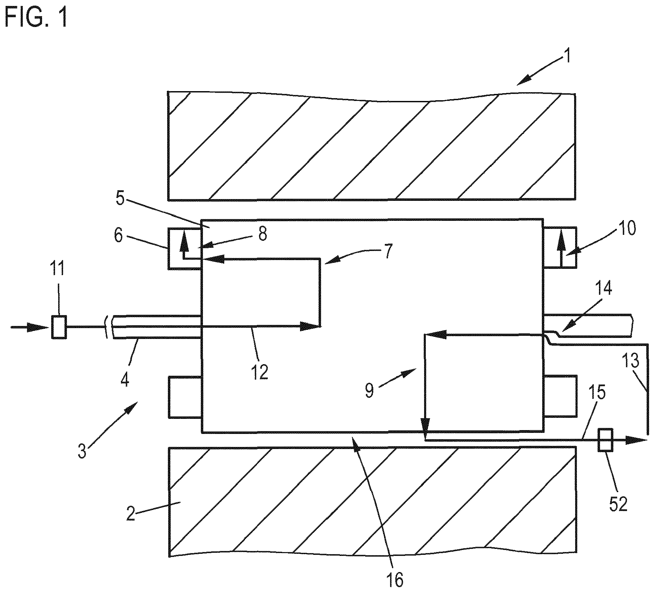

Fig. 1 zeigt schematisch eine elektrische Maschine 1 mit einem Stator 2 und einem Rotor 3. Der Rotor 3 umfasst ein an einer Rotorwelle 4 befestigtes Blechpaket 5 sowie axial an den Stirnflächen des Blechpakets 5 angeordnete Kurzschlussringe 6. Die Kurzschlussringe 6 dienen dazu, nicht dargestellte, durch das Blechpaket 5 getragene Stromleitelemente des Rotors 3 zu tragen, in denen über nicht gezeigt Spulen des Stators 2 Ströme induzierbar sind, um ein rotorseitiges Magnetfeld aufzubauen.

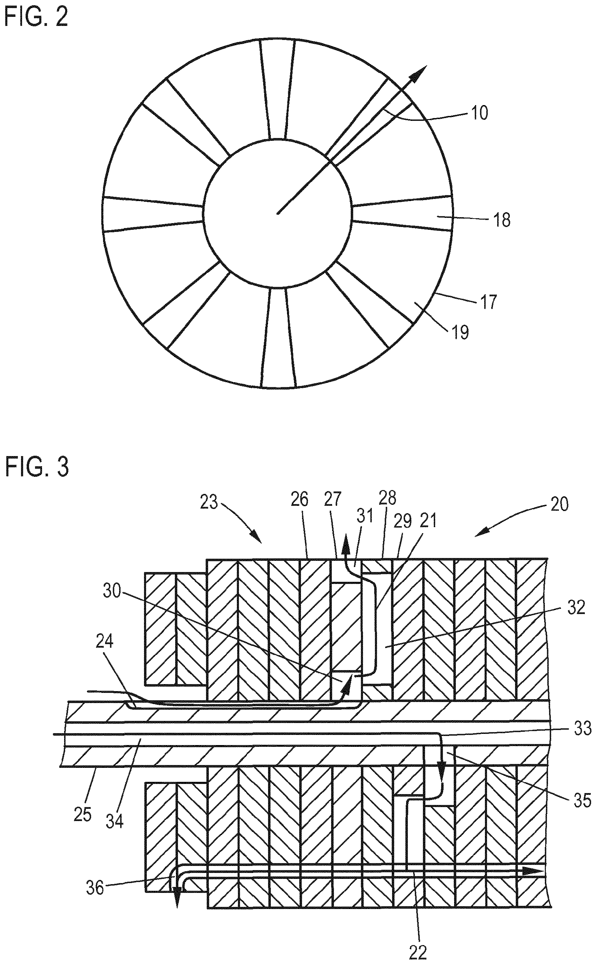

Um den Innenraum des Rotors 3 zu kühlen, sind in dem Blechpaket 5 und den Kurzschlussringen 6 mehrere Kühlkanäle 7, 8, 9, 10 für Kühlfluid vorgesehen, die sich zumindest abschnittsweise in Radialrichtung des Rotors 3 erstrecken. Die Kühlkanäle 7 bis 10 sind in Fig. 1 schematisch durch Pfeile dargestellt. Verschiedene Möglichkeiten zum konkreten Aufbau der Kühlkanäle werden später noch mit Bezug auf die Fig. 2 bis 6 diskutiert werden.

Die elektrische Maschine 1 kann derart ausgebildet sein, dass die verschiedenen Kühlkanäle 7 bis 10 zumindest teilweise unterschiedliche Kühlfluide führen. Beispielsweise kann über die Kühlkanäle 7, 8 flüssiges Kühlmittel, insbesondere Öl, durch den Rotor 3 geführt werden und über die Kühlkanäle 9, 10 gasförmiges Kühlfluid, insbesondere Umgebungsluft.

Um Kühlfluid zu den Kühlkanälen 7, 8 zu führen, wird dies zunächst durch die als Hohlwelle ausgebildete Rotorwelle 4 geführt. Hierzu ist die Rotorwelle 4, beispielsweise über eine Radialwellendichtung, mit einer Pumpe als Umwälzeinrichtung 11 verbunden, die das Kühlfluid umwälzt. Alternativ könnte das Kühlfluid auch anderweitig der Hohlwelle zugeführt werden. Beispielsweise können Öl oder ein anderes Kühlfluid aus dem Innenraum der elektrischen Maschine über eine Öffnung der Hohlwelle in die Hohlwelle eintreten. Eine Umwälzeinrichtung ist nicht notwendig. Es ist auch möglich, das Kühlfluid alleine durch die in den Kühlkanälen 7, 8 bei einer Rotation des Rotors wirkenden Zentrifugalkräfte umzuwälzen.

Die Zuführung von Kühlfluid zu dem Kühlkanal 9 erfolgt, wie durch den Pfeil 13 gezeigt, über eine Nut 14 der Rotorwelle 4. Durch das Vorsehen der Nut 14 entsteht in einem Umfangsabschnitt des Rotors 3 eine Kühlfluidleitung zwischen der Rotorwelle 4 und dem Blechpaket 5, durch die das Kühlfluid zu dem Kühlkanal 9 geführt wird. Der Kühlkanal 9 führt das Kühlfluid in den Spalt 16 zwischen Rotor 3 und Stator 2. Um die Umwälzung des Kühlfluids zu verbessern, wird das Kühlfluid aus diesem Spalt durch die Umwälzeinrichtung 52, einen Ventilator, abgesaugt, was durch den Pfeil 15 dargestellt wird.

Der Kühlkanal 10 verläuft ausschließlich durch einen der Kurzschlussringe 6. Die Umwälzung des Kühlfluids erfolgt hierbei ausschließlich dadurch, dass der Rotor rotiert, womit auf das Kühlfluid in dem Kühlkanal 10 eine Zentrifugalkraft wirkt, die das Kühlfluid zu der äußeren Mantelfläche des Kurzschlussringes 6 führt. Hierdurch entsteht im Bereich der Innenmantelfläche des Kurzschlussrings 6 ein Unterdruck, der als Kühlfluid aus der Umgebung ansaugt.

Möglichkeiten zur Realisierung der in Fig. 1 ausschließlich schematisch dargestellte Kühlkanäle 7 bis 10 bzw. entsprechender Kühlkanäle in anderen elektrischen Maschinen werden im Folgenden mit Bezug auf die Fig. 2 bis 6 erläutert.

Fig. 2 zeigt eine von mehreren, insbesondere von zwei, Scheiben, aus denen der Kurzschlussring 6 in Fig. 1 aufgebaut sein kann, um den Kühlmittelkanal 10 zu realisieren. Die Oberfläche der Scheibe 17 weist in Umfangsrichtung abwechselnd Erhebungsbereiche 19 und Vertiefungsbereiche 18 auf. Die Vertiefungsbereiche 18 können beispielsweise aus der Scheibe 17 gefräst werden oder die Scheibe 17 kann bereits derart hergestellt werden, dass ihre Oberfläche die Erhebungs- und Vertiefungsbereiche 18, 19 aufweist. Werden mehrere der Scheiben 17 mit der in Fig. 2 gezeigten Oberfläche aufeinandergelegt und entsprechend ausgerichtet, bilden jeweils Paare von Vertiefungsbereichen 18 der Scheiben die Kühlkanäle 10.

Fig. 3 zeigt einen Rotor 20, der ähnliche Kühlkanäle 21, 22 aufweist, wie der in Fig. 1 gezeigte Rotor 3. Der Kühlmittelkanal 21 führt ein insbesondere gasförmiges Kühlfluid von einer Innenmantelfläche des Blechpakets 23 zu einer Außenmantelfläche des Blechpakets 23. Das Kühlfluid wird hierbei über eine Nut 24 der Rotorwelle 25 zugeführt. Der Kühlkanal 21 wird durch vier Bleche 26, 27, 28, 29 des Blechpakets 23 begrenzt. Hierbei weisen die Bleche 27, 28 Durchbrechungen 30, 31, 32 auf, durch die das Kühlfluid fließen kann. Da die Durchbrechungen 30, 31 des Blechs 27 in Radial- und Umfangsrichtung jeweils mit einem Abschnitt der Durchbrechung 32 überlappen, wird der durchgängige Kühlkanal 21 gebildet.

Der Kühlkanal 22 wird ebenfalls durch mehrere Bleche des Blechpakets 23 gebildet, die unterschiedliche in Radial- und Umfangsrichtung des Rotors überlappende Durchbrechungen aufweisen. Das Kühlfluid wird, wie durch den Pfeil 33 dargestellt, über eine Kühlfluidleitung 34 zu dem Kühlkanal 22 geführt, die dadurch gebildet wird, dass die Rotorwelle 25 als Hohlwelle ausgebildet ist. Durch eine Öffnung 35 im Mantel der Rotorwelle 25 wird das, insbesondere flüssige, Kühlfluid innenmantelseitig dem Kühlkanal 22 zugeführt. Im Kühlkanal 22 wird das Kühlfluid zunächst im Wesentlichen radial nach außen geführt, bevor es in einen axial verlaufenden Abschnitt des Kühlkanals 22 eintritt, der das Blechpaket 23 axial durchsetzt. Durch diesen Kühlkanalabschnitt wird das Kühlfluid zu einer Ausnehmung des Kurzschlussrings geführt, um diesen zusätzlich zu kühlen.

Die Ausnehmungen des Blechpakets 23, die die Stromleitelemente aufnehmen, liegen außerhalb der Schnittebene und sind daher nicht dargestellt.

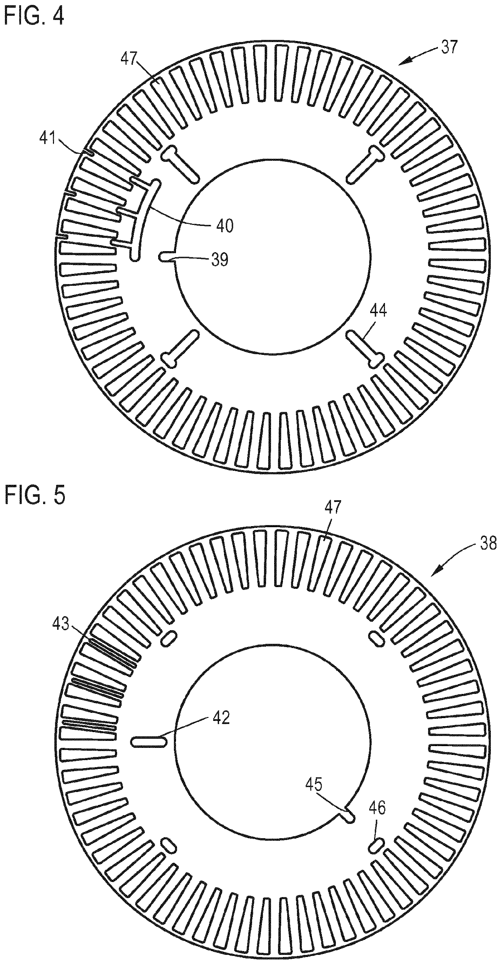

Aus Übersichtlichkeitsgründen sind die einzelnen Kühlkanäle 21, 22 in Fig. 3 so dargestellt, dass sie sich ausschließlich in Axial- und Radialrichtung erstrecken. Zur besseren Kühlung des Rotors kann es vorteilhaft sein, wenn zumindest Teile der Kühlkanäle auch Abschnitte aufweisen, die sich Umfangsrichtung des Rotors erstrecken. Ein Beispiel hierfür wird im Folgenden mit Bezug auf die Fig. 4 bis 6 erläutert.

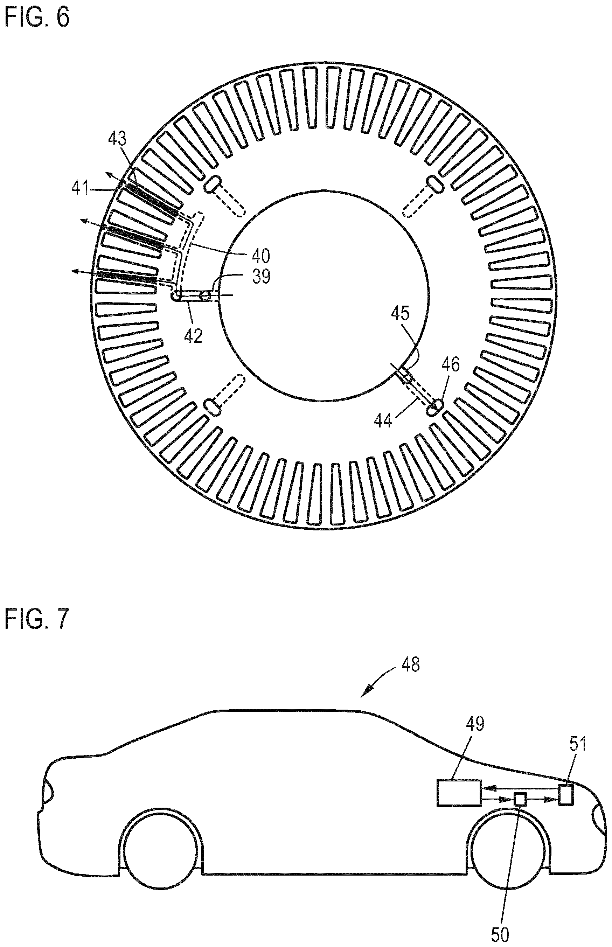

Die Fig. 4 und 5 zeigen jeweils ein Blech 37, 38. Werden die Bleche 37, 38 zu einem an einer Rotorwelle angeordneten Blechpaket gestapelt, so werden durch eine Vielzahl von Durchbrechungen 39 bis 46 der Bleche 37, 38 Kühlmittelkanäle gebildet. Dies ist beispielsweise in Fig. 6 zu erkennen, die eine Überlagerung der beiden Bleche 37, 38 zeigt, wobei die Durchbrechungen in dem Blech 37 gestrichelt dargestellt sind und der Verlauf der Kühlkanäle durch Pfeile verdeutlicht ist.

Das Blechpaket kann beispielsweise derart gebildet werden, dass jeweils abwechselnd ein Blech 37 und einem Blech 38 gestapelt werden, wobei bei jeder Wiederholung des Paares der Bleche 37, 38 die darauffolgenden Bleche 37, 38 um 90° rotiert werden. Dies führt dazu, dass Kühlkanäle in mehreren Umfangssegmenten des Blechpakets gebildet werden. Selbstverständlich ist es möglich, dass statt einem einzelnen Blech 37, 38 jeweils ein Stapel mehrerer gleich ausgerichteter Bleche 37, 38 genutzt wird, um die Ausdehnung der einzelnen Kühlkanäle in Axialrichtung zu erhöhen.

Ein Kühlkanal, der sich von einer Innenmantelfläche des resultierenden Blechpakets bis zu einer Außenmantelfläche dieses Blechpakets erstreckt, wird durch die Durchbrechungen 39, 40, 41 des Blechs 37 und die Durchbrechungen 42, 43 des Bleches 38 gebildet. Wie in Fig. 6 dargestellt, überlappt die Ausnehmung 42 des Blechs 38 mit den Ausnehmungen 39, 40 des Bleches 37. Die Ausnehmung 43 des Bleches 38 überlappt mit den Ausnehmungen 40 und 41 des Bleches 37. Hierdurch wird ein durchgehender Kühlkanal von der Innenmantelfläche zu der Außenmantelfläche des Blechpakets gebildet.

Der zweite Kühlkanal wird durch die Durchbrechung 44 des Blechs 37 und die Durchbrechungen 45, 46 des Bleches 38 gebildet. Die Durchbrechung 44 überlappt, wie in Fig. 6 gezeigt ist, mit den Durchbrechungen 45, 46 des Blechs 38. Hierdurch wird in Radialrichtung ein Kühlkanal gebildet, der sich von der Innenmantelfläche des Blechpakets bis zu der Durchbrechung 46 erstreckt. Da die Durchbrechungen 44, 46 jeweils in Umfangsrichtung viermal um 90° versetzt in den Blechen 37, 38 vorgesehen sind, resultiert bei der vorangehend beschriebenen Anordnung, bei der Paare von Blechen 37, 38 jeweils um 90° gegeneinander rotiert werden, durch den Überlapp der Durchbrechungen 44, 46 ein durchgängiger Kühlmittelkanal in Axialrichtung, der sich bis zum Ende des Blechpakets erstreckt. Das an der Innenmantelfläche zugeführte Kühlmittel kann somit axialseitig ausströmen bzw. in einen Kühlmittelkanal eines Kurzschlussrings einströmen.

Beide Bleche 37, 38 weisen eine Vielzahl von Durchbrechungen 47 auf, die, wie in Fig. 6 zu sehen ist, im resultierenden Blechpaket in Axialrichtung durchgehende Ausnehmungen bilden. In diese Ausnehmungen wird im Rahmen der Herstellung des Rotors ein jeweiliges Stromleitelement eingebracht. Beispielsweise können vorgefertigte Stromleitstäbe eingefügt werden oder diese Ausnehmungen können mit leitfähigem Material ausgegossen werden. Die durch die Durchbrechungen 47 geführten Stromleitelemente können anschließend durch ein Aufsetzen von Kurzschlussringen auf das Blechpaket leitend verbunden werden, um den Rotor fertigzustellen.

Die erläuterte elektrische Maschine kann beispielsweise in einem Kraftfahrzeug 48 genutzt werden, wie es in Fig. 7 gezeigt ist. Die elektrische Maschine 49 entspricht im Wesentlichen der in Fig. 1 gezeigten elektrischen Maschine 1, wobei statt einer Umwälzeinrichtung 11 innerhalb der elektrischen Maschine 1 in dem Kraftfahrzeug 48 eine Pumpe 50 vorgesehen ist, die außerhalb der elektrischen Maschine 49 angeordnet ist. Die Pumpe 50 pumpt flüssiges Kühlfluid, beispielsweise Öl, das sich in einem unteren Bereich der elektrischen Maschine 49 sammelt, durch einen Wärmetauscher 51, in dem dieses Öl durch Umgebungsluft gekühlt wird. Anschließend wird das gekühlte Öl zur elektrischen Maschine 49 zurückgeführt. Dort kann es über eine Hohlwelle der elektrischen Maschine 49 in das Innere des Rotors geführt werden und dort, wie in Fig. 1 bezüglich der Kühlkanäle 7, 8 dargestellt, durch den Rotor geführt werden, um diesen zu kühlen.

## Patentansprüche

1. Elektrische Maschine, umfassend einen Stator (2) und einen Rotor (3, 20), wobei der Rotor (3, 20) ein an einer Rotorwelle (4, 25) der elektrischen Maschine (1, 49) befestigtes Blechpaket (5, 23) aus in Axialrichtung des Rotors (3, 20) geschichteten Blechen (26, 27, 28, 29, 37, 38) umfasst, wobei das Blechpaket (5, 23) wenigstens einen Kühlkanal (7, 9, 21, 22) für ein Kühlfluid ausbildet, wobei der Kühlkanal (7, 9, 21, 22) dadurch ausgebildet ist, dass mehrere Bleche (26, 27, 28, 29, 37, 38) wenigstens eine jeweilige Durchbrechung (30, 31, 32, 39, 40 - 47) in Axialrichtung des Rotors (3, 20) aufweisen, wobei sich der Kühlkanal (7, 9, 21, 22) zumindest abschnittsweise in Radialrichtung des Rotors (3, 20) erstreckt, wobei der in Radialrichtung des Rotors (3, 20) verlaufende Abschnitt des Kühlkanals (7, 9, 21, 22) oder wenigstens einer dieser Abschnitte durch eine der Durchbrechungen (30, 31, 32, 39, 40 - 47) der Bleche (26, 27, 28, 29, 37, 38) gebildet ist,
**dadurch gekennzeichnet,**
**dass** der wenigstens ein Kühlkanal (7,8,9,21,22) wenigstens zwei separate Kühlkanäle (7, 8, 9, 10, 21, 22) oder Gruppen der Kühlkanäle (7, 8, 9, 10, 21, 22) umfasst, denen voneinander unterschiedliche Kühlfluide zuführbar sind.

2. Elektrische Maschine nach Anspruch 1,
**dadurch gekennzeichnet,**
**dass** wenigstens ein an einer Axialseite des Blechpakets (5, 23) angeordneter Kurzschlussring (6) wenigstens einen Kühlkanal (8, 10) für ein Kühlfluid ausbildet, der sich zumindest abschnittsweise in Radialrichtung des Rotors (3, 20) erstreckt.

3. Elektrische Maschine nach Anspruch 1 oder 2,
**dadurch gekennzeichnet,**
**dass** der Kühlkanal (7, 8, 9, 10, 21, 22) durch wenigstens zwei Bleche (26, 27, 28, 29, 37, 38) des Blechpakets (5, 23) begrenzt wird und/oder dass der Kurzschlussring (6) wenigstens zwei axial benachbarte Scheiben (17) aufweist, die den Kühlkanal (7, 8, 9, 10, 21, 22) begrenzen.

4. Elektrische Maschine nach Anspruch 3,
**dadurch gekennzeichnet,**
**dass** sich wenigstens zwei der Bleche (26, 27, 28, 29, 37, 38) bezüglich der Anzahl und/oder der Form und/oder der Position und/oder der Orientierung von zumindest Teilen ihrer Durchbrechungen (30, 31, 32, 39, 40 - 47) voneinander unterscheiden, wobei der Kühlkanal (7, 8, 9, 10, 21, 22) durch Durchbrechungen (30, 31, 32, 39, 40 - 47) dieser Bleche (26, 27, 28, 29, 37, 38) gebildet ist.

5. Elektrische Maschine nach einem der vorangehenden Ansprüche,
**dadurch gekennzeichnet,**
**dass** sich der Kühlkanal (7, 8, 9, 10, 21, 22) von einer radial innen liegenden Innenmantelfläche des Blechpakets (5, 23) oder des Kurzschlussrings (6) zu einer radial außenliegenden Außenmantelfläche des Blechpakets (5, 23) oder des Kurzschlussrings (6) erstreckt.

6. Elektrische Maschine nach einem der vorangehenden Ansprüche,
**dadurch gekennzeichnet,**
**dass** innerhalb der Rotorwelle (4, 25) und/oder zwischen der Rotorwelle (4, 25) und dem Blechpaket (5, 23) und/oder innerhalb des Blechpakets eine (5, 23) in Axialrichtung verlaufende Kühlfluidleitung (34) ausgebildet ist, über die das Kühlfluid dem Kühlkanal (7, 8, 9, 10, 21, 22) zuführbar ist.

7. Elektrische Maschine nach einem der vorangehenden Ansprüche,
**dadurch gekennzeichnet,**
**dass** er eine Umwälzeinrichtung (11, 52) aufweist, durch die das Kühlfluid durch den Kühlkanal (7, 8, 9, 10, 21, 22) zirkulierbar ist.

8. Kraftfahrzeug,
**dadurch gekennzeichnet,**
**dass** es eine elektrische Maschine (1, 49) nach einem der vorangehenden Ansprüche umfasst.

9. Verfahren zur Herstellung eines Rotors (3, 20) einer elektrischen Maschine (1, 29) gemäß einem der Ansprüche 1 bis 7, wobei mehrere Bleche (26, 27, 28, 29, 37, 38) mit jeweils mehreren Durchbrechungen (30, 31, 32, 39, 40 - 47) bereitgestellt werden, wobei die Bleche (26, 27, 28, 29, 37, 38) zu einem an einer Rotorwelle (4, 25) angeordneten Blechpaket (5, 23) gestapelt werden, wobei in mehrere durch eine erste Gruppe der Durchbrechungen (30, 31, 32, 39, 40 - 47) der Bleche (26, 27, 28, 29, 37, 38) gebildete, das Blechpaket (5, 20) axial durchsetzende Ausnehmungen ein jeweiliges Stromleitelement eingebracht wird, wobei die Bleche (26, 27, 28, 29, 37, 38) derart gestapelt werden, dass sich zumindest zwei benachbarte der Bleche (26, 27, 28, 29, 37, 38) bezüglich der Anzahl und/oder der Form und/oder der Position und/oder der Orientierung von zumindest Teilen ihrer Durchbrechungen (30, 31, 32, 39, 40 - 47) voneinander unterscheiden und/oder dass die Bleche (26, 27, 28, 29, 37, 38) relativ zueinander rotiert gestapelt werden, wobei durch eine zweite Gruppe der Durchbrechungen (30, 31, 32, 39, 40 - 47) wenigstens einen Kühlkanal (7, 9, 21, 22) für Kühlfluid ausbildet wird, wobei sich der Kühlkanal (7, 9, 21, 22) zumindest abschnittsweise in Radialrichtung des Rotors (3, 20) erstreckt, wobei der in Radialrichtung des Rotors (3, 20) verlaufende Abschnitt des Kühlkanals (7, 9, 21, 22) oder wenigstens einer dieser Abschnitte durch eine der Durchbrechungen (30, 31, 39, 40 - 47) der Bleche (26, 27, 28, 29, 37, 38) gebildet wird, **dadurch gekennzeichnet, dass** das wenigstens ein Kühlkanal (7, 9, 21, 22) wenigstens zwei separate Kühlkanäle (7, 8, 9, 10, 21, 22) oder Gruppen der Kühlkanäle (7, 8, 9, 10, 21, 22) umfasst, denen voneinander unterschiedlich Kühlfluide zuführbar sind.

## Claims

1. Electrical machine comprising a stator (2) and a rotor (3, 20), wherein the rotor (3, 20) comprises a laminated core (5, 23), attached to a rotor shaft (4, 25) of the electrical machine (1.49), made up of laminations (26, 27, 28, 29, 37, 38) layered in the axial direction of the rotor (3, 20), wherein the laminated core (5, 23) forms at least one cooling channel (7, 9, 21, 22) for a cooling fluid, wherein the cooling channel (7, 9, 21, 22) is formed in that a plurality of laminations (26, 27, 28, 29, 37, 38) have at least one respective opening (30, 31, 32, 39, 40 - 47) in the axial direction of the rotor (3, 20), wherein the cooling channel (7, 9, 21, 22) extends at least in sections in the radial direction of the rotor (3, 20), wherein the section of the cooling channel (7, 9, 21, 22) running in the radial direction of the rotor (3, 20), or at least one of these sections, is formed through one of the openings (30, 31, 32, 39, 40 - 47) of the laminations (26, 27, 28, 29, 37, 38),
**characterised in that**
the at least one cooling channel (7,8,9,21,22) comprises at least two separate cooling channels (7, 8, 9, 10, 21, 22) or groups of cooling channels (7, 8, 9, 10, 21, 22), from which different cooling fluids can be supplied.

2. Electrical machine according to claim 1,
**characterised in that**
at least one short-circuit ring (6) arranged on an axial side of the laminated core (5, 23) forms at least one cooling channel (8, 10) for a cooling fluid, which extends at least in sections in the radial direction of the rotor (3, 20).

3. Electrical machine according to claim 1 or 2,
**characterised in that**
the cooling channel (7, 8, 9, 10, 21, 22) is delimited by at least two laminations (26, 27, 28, 29, 37, 38) of the laminated core (5, 23) and/or **in that** the short-circuit ring (6) has at least two axially adjacent discs (17) which delimit the cooling channel (7, 8, 9, 10, 21, 22).

4. Electrical machine according to claim 3,
**characterised in that**
at least two of the laminations (26, 27, 28, 29, 37, 38) differ from each other in terms of the number and/or the shape and/or the position and/or the orientation of at least parts of their openings (30, 31, 32, 39, 40 - 47), wherein the cooling channel (7, 8, 9, 10, 21, 22) is formed by openings (30, 31, 32, 39, 40 - 47) in these laminations (26, 27, 28, 29, 37, 38).

5. Electrical machine according to any one of the preceding claims,
**characterised in that**
the cooling channel (7, 8, 9, 10, 21, 22) extends from a radially inner surface of the laminated core (5, 23) or the short-circuit ring (6) to a radially outer surface of the laminated core (5, 23) or short circuit ring (6).

6. Electrical machine according to any one of the preceding claims,
**characterised in that**
a (5, 23) cooling fluid line (34) running in the axial direction is formed within the rotor shaft (4, 25) and/or between the rotor shaft (4, 25) and the laminated core (5, 23) and/or within the laminated core, via which the cooling fluid can be fed to the cooling channel (7, 8, 9, 10, 21, 22).

7. Electrical machine according to any one of the preceding claims,
**characterised in that**
it has a circulating means (11, 52) through which the cooling fluid can be circulated through the cooling channel (7, 8, 9, 10, 21, 22).

8. Motor vehicle,
**Characterised in that**
it comprises an electrical machine (1, 49) according to any one of the preceding claims.

9. Method for producing a rotor (3, 20) of an electrical machine (1, 29) according to any one of claims 1 to 7, wherein a plurality of laminations (26, 27, 28, 29, 37, 38) are provided, each with a plurality of openings (30, 31, 32, 39, 40 - 47), wherein the laminations (26, 27, 28, 29, 37, 38) are stacked to form a laminated core (5, 23) arranged on a rotor shaft (4, 25), wherein a respective current conducting element is introduced into a plurality of recesses formed by a first group of openings (30, 31, 32, 39, 40 - 47) in the laminations (26, 27, 28, 29, 37, 38), which recesses axially penetrate the laminated core (5, 20), wherein the laminations (26, 27, 28, 29, 37, 38) are stacked in such a way that at least two adjacent laminations (26, 27, 28, 29, 37, 38) are different from one another with regard to the number and/or the shape and/or the position and/or the orientation of at least parts of their openings (30, 31, 32, 39, 40 - 47) and/or that the laminations (26, 27, 28, 29, 37, 38) are stacked rotated relative to one another, wherein at least one cooling channel (7, 9, 21, 22) for cooling fluid is formed by a second group of openings (30, 31, 32, 39, 40 - 47), wherein the cooling channel (7, 9, 21, 22) extends at least in sections in the radial direction of the rotor (3, 20), wherein the section of the cooling channel (7, 9, 21, 22) running in the radial direction of the rotor (3, 20), or at least one of these sections, is formed through one of the openings (30, 31, 39, 40 - 47) of the laminations (26, 27, 28, 29, 37, 38), **characterised in that** the at least one cooling channel (7, 9, 21, 22) comprises at least two separate cooling channels (7, 8, 9, 10, 21, 22) or groups of cooling channels (7, 8, 9, 10, 21, 22), from which different cooling fluids can be supplied.

## Revendications

1. Machine électrique, comprenant un stator (2) et un rotor (3, 20), dans laquelle le rotor (3, 20) comprend un paquet de tôles (5, 23) fixé sur un arbre de rotor (4, 25) de la machine électrique (1, 49) en provenance de tôles stratifiées (26, 27, 28, 29, 37, 38) dans une direction axiale du rotor (3, 20), dans laquelle le paquet de tôles (5, 23) forme au moins un canal de refroidissement (7, 9, 21, 22) pour un fluide de refroidissement, dans laquelle le canal de refroidissement (7, 9, 21, 22) est formé de sorte que plusieurs tôles (26, 27, 28, 29, 37, 38) présentent au moins une perforation (30, 31, 32, 39, 40 - 47) respective dans une direction axiale du rotor (3, 20), dans laquelle le canal de refroidissement (7, 9, 21, 22) s'étend au moins en partie dans une direction radiale du rotor (3, 20), dans laquelle la partie du canal de refroidissement (7, 9, 21, 22) s'étendant dans la direction du rotor (3, 20) ou au moins une de ces parties est formée par l'intermédiaire d'une des perforations (30, 31, 32, 39, 40 - 47) des tôles (26, 27, 28, 29, 37, 38).
**caractérisée en ce que**
l'au moins un canal de refroidissement (7, 8, 9, 21, 22) comprend au moins deux canaux de refroidissement (7, 8, 9, 10, 21, 22) séparés ou des groupes des canaux de refroidissement (7, 8, 9, 10, 21, 22), vers lesquels des fluides de refroidissement différents les uns des autres peuvent être amenés.

2. Machine électrique selon la revendication 1,
**caractérisée en ce qu'**
au moins une bague de court-circuit (6) agencée sur un côté axial du paquet de tôles (5, 23) forme au moins un canal de refroidissement (8, 10) pour un fluide de refroidissement qui s'étend au moins en partie dans une direction radiale du rotor (3, 20).

3. Machine électrique selon la revendication 1 ou 2,
**caractérisée en ce que**
le canal de refroidissement (7, 8, 9, 10, 21, 22) est délimité par au moins deux tôles (26, 27, 28, 29, 37, 38) du paquet de tôles (5, 23) et/ou **en ce que** la bague de court-circuit (6) présente au moins deux disques axialement adjacents (17) qui délimitent le canal de refroidissement (7, 8, 9, 10, 21, 22).

4. Machine électrique selon la revendication 3,
**caractérisée en ce qu'**
au moins deux des tôles (26, 27, 28, 29, 37, 38) se différencient les unes des autres en ce qui concerne le nombre et/ou la forme et/ou la position et/ou l'orientation d'au moins des parties de leurs perforations (30, 31, 32, 39, 40 - 47), dans laquelle le canal de refroidissement (7, 8, 9, 10, 21, 22) est réalisé au moyen de perforations (30, 31, 32, 39, 40 - 47) de ces tôles (26, 27, 28, 29, 37, 38).

5. Machine électrique selon l'une quelconque des revendications précédentes,
**caractérisée en ce que**
le canal de refroidissement (7, 8, 9, 10, 21, 22) s'étend de la surface de l'enveloppe intérieure du paquet de tôles (5, 23) ou de la bague de court-circuit (6) située radialement à l'intérieur vers une surface de l'enveloppe extérieure du paquet de tôles (5, 23) ou de la bague de court-circuit (6) située radialement à l'extérieur.

6. Machine électrique selon l'une quelconque des revendications précédentes,
**caractérisée en ce qu'**
au sein de l'arbre de rotor (4, 25) et/ou entre l'arbre de rotor (4, 25) et le paquet de tôles (5, 23) et/ou au sein du paquet de tôles (5, 23), un conduit de fluide de refroidissement (34) est formé se déroulant dans une direction axiale, au-dessus duquel le fluide de refroidissement peut être amené au canal de refroidissement (7, 8, 9, 10, 21, 22).

7. Machine électrique selon l'une quelconque des revendications précédentes,
**caractérisée en ce qu'**
il présente un dispositif de circulation (11, 52) à travers lequel le fluide de refroidissement peut circuler à travers le canal de refroidissement (7, 8, 9, 10, 21, 22).

8. Automobile,
**caractérisée en ce qu'**
elle comprend une machine électrique (1, 49) selon l'une quelconque des revendications précédentes.

9. Procédé de fabrication d'un rotor (3, 20) d'une machine électrique (1, 29) selon l'une quelconque des revendications 1 à 7, dans lequel plusieurs tôles (26, 27, 28, 29, 37, 38) sont dotées de plusieurs perforations (30, 31, 32, 39, 40 - 47) respectives, dans lequel les couches (26, 27, 28, 29, 37, 38) sont empilées en un paquet de tôles (5, 23) agencé sur un arbre de rotor (4, 25), dans lequel un élément conducteur d'électricité respectif est introduit dans une pluralité de cavités formées par un premier groupe de perforations (30, 31,32, 39, 40 - 47) dans les tôles (26, 27, 28, 29, 37, 38), lesquelles cavités traversent le paquet de tôles (5, 20) de manière axiale, dans lequel les tôles (26, 27, 28, 29, 37, 38) sont empilées de sorte qu'au moins deux des tôles (26, 27, 28, 29, 37, 38) adjacentes se différencient les unes des autres en ce qui concerne le nombre et/ou la forme et/ou la position et/ou l'orientation d'au moins des parties de leurs perforations (30, 31, 32, 39, 40 - 47) et/ou se sorte que les tôles (26, 27, 28, 29, 37, 38) sont empilées en pouvant tourner les unes par rapport aux autres, dans lequel au moyen d'un deuxième groupe des perforations (30, 31,32, 39, 40 - 47) est formé au moins un canal de refroidissement (7, 9, 21, 22) pour un fluide de refroidissement, dans lequel le canal de refroidissement (7, 9, 21, 22) s'étend au moins en partie dans une direction radiale du rotor (3, 20), dans lequel la partie du canal de refroidissement (7, 9, 21, 22) s'étendant dans une direction radiale du rotor (3, 20) ou au moins une de ces parties est formée par une des perforations (30, 31, 39, 40 - 47) des tôles (26, 27, 28, 29, 37, 38), **caractérisé en ce que** l'au moins un canal de refroidissement (7, 9, 21, 22) présente au moins deux canaux de refroidissement séparés (7, 8, 9, 10, 21, 22) ou des groupes de canaux de refroidissement (7, 8, 9, 10, 21, 22), vers lesquels des fluides de refroidissement différents les uns des autres peuvent être amenés.
